# EUROPÄISCHE PATENTSCHRIFT

(11) **EP 3 198 168 B1**
(45) Veröffentlichungstag und Bekanntmachung des Hinweises auf die Patenterteilung: **23.02.2022**
(21) Anmeldenummer: 15741969.8
(22) Anmeldetag: 16.07.2015
(51) Int. Cl.: B32B 1/00, B32B 7/05, B32B 25/08, B32B 25/10, B32B 27/12, B32B 27/28, B32B 27/30, B32B 27/32, B32B 27/36, F16F 9/04, F16F 9/05, B29D 22/02, B32B 5/02

(54) **ARTIKEL, INSBESONDERE EIN LUFTFEDERBALG, EIN METALL-GUMMI-ELEMENT ODER EIN SCHWINGUNGSDÄMPFER**
ARTICLE, PARTICULARLY AN AIR SPRING BELLOWS, A METAL-RUBBER ELEMENT, OR A VIBRATION DAMPER
ARTICLE, EN PARTICULIER SOUFFLET PNEUMATIQUE, ÉLÉMENT EN MÉTAL-CAOUTCHOUC OU AMORTISSEUR DE VIBRATIONS

(30) Priorität: 26.09.2014 DE 102014219613
(43) Veröffentlichungstag der Anmeldung: 02.08.2017
(73) Patentinhaber: ContiTech Luftfedersysteme GmbH, 30165 Hannover (DE)
(72) Erfinder: ZANDER, Christoph, 22927 Grosshansdorf (DE); LEETHAUS, Thorsten, 37632 Eschershausen (DE); LINDENBERG, Mark, 30826 Garbsen (DE); KIELBASIEWICZ, Hans-Harald, 21266 Jesteburg (DE); BUCKSCH, Lars, 30175 Hannover (DE)
(74) Vertreter: Continental Corporation
(86) Internationale Anmeldenummer: PCT/EP2015/066233
(87) Internationale Veröffentlichungsnummer: WO 2016/045813

(56) Entgegenhaltungen:
- EP-A1- 2 404 748
- EP-A2- 1 371 872
- DE-A1-102006 016 144
- DE-B- 1 287 453

## Beschreibung

Die Erfindung betrifft einen Artikel mit einem Grundkörper aus einem polymeren Werkstoff mit elastischen Eigenschaften, insbesondere einen Luftfederbalg, ein Metall-Gummi-Element oder einen Schwingungsdämpfer.

Artikel aus polymeren Werkstoffen, die zur Federung bspw. von Kraftfahrzeugen oder Schienenfahrzeugen eingesetzt werden und / oder der Schwingungsdämpfung dienen, werden unter Verwendung elastomerer Mischungen, auch als Kautschukmischungen bezeichnet, hergestellt. Diese, für die grundlegenden Eigenschaften solcher Artikel üblicherweise verwendeten elastomeren Mischungen sind hinreichend bekannt. Artikel mit herausragenden elastischen Eigenschaften, wie bspw. Metall-Gummi Elemente oder Schwingungsdämpfer, enthalten vorzugsweise vulkanisierte Kautschukmischungen, die überwiegend auf Naturkautschuk (NR) und / oder Polyisoprenkautschuk (IR) basieren. Artikel mit einer sehr guten Witterungs-, Mineralöl- und Wärmebeständigkeit, wie bspw. Luftfederbälge, enthalten vorzugsweise vulkanisierte Kautschukmischungen, die überwiegend auf Chloroprenkautschuk (CR) basieren.

Allerdings zeigen Artikel mit diesen elastomeren Mischungen deutliche Nachteile im Brandverhalten. Im Brandfall entstehen unter anderem dichte Rauchgase. Beim Verbrennungsprozess der genannten elastomeren Mischungen, die überwiegend auf NR und / oder IR basieren, ist die Wärmefreisetzungsrate besonders hoch. Beim Verbrennungsprozess der elastomeren Mischungen, die überwiegend auf CR basieren, ist das entstehende Rauchgas für Mensch und Tier toxisch.

Aufgrund der in den letzten Jahren gestiegenen Anforderungen hinsichtlich des Brandschutzes, welche sich vor allem in der verschärften Brandschutznorm EN45545 zeigt, ergibt sich ein erhöhter Bedarf an brandschutzoptimierten Polymerartikeln. Diesen Brandschutzanforderungen können sowohl die genannten elastomeren Mischungen, die überwiegend auf NR und / oder IR basieren, vor allem aufgrund der geforderten maximalen Wärmefreisetzungsrate, als auch die flammwidrigen elastomeren Mischungen, die überwiegend auf CR basieren, insbesondere aufgrund der geforderten Rauchgastoxizität, nicht mehr gerecht werden. Somit erfüllen die Artikel, welche diese elastomeren Mischungen enthalten, die verschärften Anforderungen zumeist nicht mehr. Eine übliche Methode das Brandverhalten von Kautschukmischungen zu verbessern, ist das direkte Einmischen von brandhemmenden Substanzen. Allerdings führt diese Maßnahme bei den betroffenen Artikeln in der Regel dazu, dass sich die physikalischen Eigenschaften, insbesondere die Federungs-, Setz- bzw. Schwingungseigenschaften signifikant verschlechtern.

In WO 2014/019008 A1 wird zur Lösung dieses Problems vorgeschlagen, eine ausschließlich schwefelvernetzte zusätzliche äußere Lage, enthaltend ein Vinylacetathaltiges thermoplastisches Polymer, ein Doppelbindungen-enthaltendes, ungesättigtes Elastomer und zumindest ein Flammschutzmittel, zu verwenden. Diese zusätzliche äußere Lage muss über ein gezielt gesteuertes Vulkanisationsverfahren auf das Bauteil bzw. auf den Grundkörper des Bauteils bei vergleichsweise hohen Vulkanisationstemperaturen aufvulkanisiert werden. In WO 2014/019008A1 muss somit zweimal hintereinander ein Vulkanisationsprozess durchgeführt werden. Dies bedeutet nicht nur einen produktionstechnisch höheren Aufwand, sondern die zweifache Vulkanisation kann auch zu unerwünschten und schädlichen Reversionsvorgängen in der unter der äußeren Lage befindlichen bereits vulkanisierten Polymermischung, führen. Besonders an Polymermischungen, die überwiegend auf NR und / oder IR basieren, zeigen sich bei einer Übervulkanisation signifikante Reversionsvorgänge. Um das Brandverhalten des Gesamtartikels zu verbessern muss diese zusätzliche äußere Lage des Weiteren eine gleichmäßige Mindestlagendicke besitzen, wofür eine aufwendige und teure zweite Vulkanisationsform notwendig ist. Zusätzlich hat diese äußere Lage mit einer Zusammensetzung gemäß WO 2014/019008 A1 deutliche Nachteile hinsichtlich der Mineralölbeständigkeit, was insbesondere im Schienenverkehr, ganz besonders bei Luftfedern, ungünstig ist.

In EP 2196492 B1 wird eine flammhemmende Beschichtung direkt auf den Elastomerkörper vulkanisiert. Dies gewährleistet, zumindest in den Bereichen, auf denen die flammhemmende Beschichtung aufgebracht wurde, eine Abschirmung des Elastomerkörpers. Hierbei enthält die Beschichtung wenigstens einen polymeren Binder und als flammhemmende Substanz wenigstens Blähgraphit, welcher auch als expandierbarer Graphit bezeichnet wird. Die Beschichtungszusammensetzung wird zunächst unter Einhaltung aller erforderlichen Sicherheitsmaßnahmen in Lösemitteln gelöst, im Anschluss auf das Bauteil aufgebracht und abschließend vulkanisiert. Problematisch ist hierbei die Abriebbeständigkeit der Beschichtungszusammensetzung. Des Weiteren muss sowohl die Elastizität als auch die Bruchdehnung der Beschichtung so eingestellt sein, dass im Fahrzeugbetrieb eine vorzeitige Rißbildung in der Beschichtung bzw. eine Versprödung der Beschichtung nicht eintritt. Ist die Rißbildung der Beschichtung zu stark fortgeschritten, ist der Grundkörper nicht mehr vollständig geschützt. Bei zu starker Versprödung kann im Brandfall die Beschichtung durch das Aufblähen (=Volumenzunahme) des Blähgraphits unmittelbar mit zahlreichen Rissen durchsetzt werden oder sogar unmittelbar abfallen. Durch die Vulkanisation der Beschichtung kann es, wie bereits oben erwähnt, bei den darunterliegenden Lagen zu Reversionsbildung kommen.

Aus der EP1371872A2 ist ein Luftfederbalg bekannt, der mit einer separaten Schutzmanschette aus einer textilen Werkstoff versehen ist. Die Schutzmanschette schützt den Luftfederbalg vor Schmutz.

Da Luftfederbälge, Metall-Gummi-Elemente und Schwingungsdämpfer sehr starken mechanischen Belastungen ausgesetzt sind, insbesondere im Einsatz im Schienenverkehr, müssen derartige Beschichtungen vergleichbare elastische Eigenschaften besitzen, wie der polymere Grundkörper, damit derartige Beschichtungen im Einsatz keine vorzeitigen Risse aufweisen oder sich sogar ablösen. Dies gestaltet sich mit der in WO 2014/019008 A1 beschriebenen Materialkombination schwierig und ggf. nachteilig. In EP 2196492 B1 muss eine ausreichend große Menge an Blähgraphit eingesetzt werden, um den entsprechenden Brandschutz gewährleisten zu können, was wiederum negativen Einfluss auf die physikalischen Eigenschaften, insbesondere der Elastizität und der Bruchdehnung hat.

Zusätzlich stellen beide Möglichkeiten einen deutlichen Mehr-Aufwand im industriellen Herstellprozess dar und insbesondere die Verwendung von organischen Lösemitteln kann zu gesundheitlichen Problemen der Produktionsmitarbeiter führen.

Die Aufgabe der Erfindung besteht nun darin, einen Artikel bereitzustellen, der sich durch ein optimiertes Brandschutzverhalten auszeichnet, um die verschärften Anforderungen, insbesondere die in EN-45545 beschriebenen, zu erfüllen. Gleichzeitig sollen die notwendigen physikalischen Eigenschaften des Artikels auf einem vergleichbaren Niveau verbleiben und die Komplexität im Herstellprozess nicht nennenswert erhöht werden.

Gelöst wird diese Aufgabe dadurch, dass der Artikel mit einem Grundkörper aus einem polymeren Werkstoff mit elastischen Eigenschaften, eine Artikeloberfläche besitzt, die vollständig oder teilweise mit wenigstens einem Überzug versehen ist, wobei der Überzug aus wenigstens einem textilen Flächengebilde und / oder aus wenigstens einem textilen Raumgebilde und / oder aus wenigstens einer Schrumpffolie gebildet wird, welche(s) jeweils von sich aus brandhemmend wirken kann und / oder brandhemmend ausgestattet ist und wobei der Überzug keine unmittelbare Verbindung zur Artikeloberfläche hat.

Als Überzug wird gemäß Duden eine Art Hülle aus Stoff bezeichnet, die etwas schützt. Im Rahmen der vorliegenden Erfindung schützt der Überzug den Artikel vor der Zerstörung durch einen möglichen Brand. Der Überzug besteht hierbei aus wenigstens einem textilen Flächengebilde und / oder aus wenigstens einem textilen Raumgebilde und / oder aus wenigstens einer Schrumpffolie, welche(s) jeweils von sich aus brandhemmend wirken kann und / oder brandhemmend ausgestattet ist.

Teilweise bedeutet in diesem Zusammenhang, dass lediglich bestimmte, definierte Bereiche bzw. Abschnitte der Artikeloberfläche des Gesamtartikels mit einem Überzug versehen sind.

Der Uberzug steht mit der Artikeloberfläche in keiner unmittelbaren Verbindung. Ist der Uberzug in einem nicht beanspruchten Beispiel fest haftend mit dem Artikel verbunden, so ist bei einem vollständigen Versehen die gesamte Artikeloberfläche brandgeschützt und bei einem teilweise Versehen sind die mit dem Überzug bedeckten Bereiche bzw. Abschnitte der Artikeloberfläche brandgeschützt.

Die Haftungsgüte eines fest verbundenen textilen Flächengebildes oder textilen Raumgebildes mit der auf wenigstens einem Polymer basierenden Artikeloberfläche ist in der Regel größer als bei reinen brandschutzoptimierten Beschichtungen. Zu den physikalischen und chemischen Bindungsanteilen kommt ein zusätzlicher Anteil an mechanischer Bindung aufgrund der Verankerung der textilen Fäden des textilen Flächengebildes oder Raumgebildes in die Gummioberfläche. Durch eine speziell haftungsfreundlich optimierte Präparierung der innenliegenden Textilseite kann die Haftungsgüte zwischen Textil und Artikeloberfläche zusätzlich gesteigert werden.

Wenn der Überzug selbst nicht brennbar ist, ist der Artikel insgesamt stärker brandgeschützt als bei einem oder mehrerer Beschichtungsaufträge allein.

Steht der Uberzug erfindungsgemäß in keiner unmittelbaren Verbindung zu der Artikeloberfläche, so wird keine haftfreundliche Präparierung des Textils benötigt. Das textile Flächen- oder Raumgebilde kann somit von beiden Seiten aus brandhemmend ausgestattet werden und dadurch kann die brandhemmende Ausstattung im Brandfall zu beiden Seiten expandieren. Dies bedeutet einen doppelten Schutz gegenüber der Hitzequelle bzw. den Flammen.

Des Weiteren bestehen geringere Anforderungen an die Flexibilität bzw. Elastizität des Überzugs sowie der Elastizität und Bruchdehnung der brandhemmenden Ausstattung des Überzugs, wenn der Überzug, mit oder ohne Ausstattung, nicht fest haftend ist, und somit die Bewegungen des Artikels nicht komplett mitgehen muss. Ebenso sind zur Erzielung einer ausreichenden Haftungsgüte-ggf. vorzunehmende rezeptive Änderungen der Polymermischung aus dem der Grundkörper des Artikels besteht, nicht notwendig.

Eine Haftung lässt sich durch Verwendung einer geeigneten Haftschicht bzw. Haftmischung oder durch Aktivierung der Artikeloberfläche, zum Beispiel durch Ätzen, erzielen. Eine Haftung kann auch durch die Verwendung eines geeigneten Mittels zur Grundierung, bspw. eines Primers, mit dem die Artikeloberfläche funktionalisiert wird, erzielt werden. Die Funktionalisierung der Artikeloberfläche durch Halogenieren, insbesondere Chlorieren, hat sich als besonders gut geeignet erwiesen. Aber auch andere Möglichkeiten und Arten bzw. Verfahren der Funktionalisierung sind denkbar. Bei Haftung bildet der Überzug mit der Artikeloberfläche einen Haftverbund.

Das textile Flächengebilde kann hierbei bevorzugt als Filz, Vlies, Gewebe, Geflecht, Gewirk, Gestrick oder Gelege ausgebildet sein. Es handelt sich bevorzugt um Webware (engl. woven fabric), bei der die Fläche durch Verkreuzen von zwei Fadensystemen, nämlich Kette und Schuss, hergestellt wird, oder um eine Maschenware (engl. knitted fabric), bei denen eine mittels Faden gebildete Schleife in eine andere Schleife hineingeschlungen ist und wobei die auf diese Weise entstehenden Maschen unter Verwendung eines oder mehrerer Fäden gebildet werden können.

Bei Verwendung eines Gewebes hat sich insbesondere die Verwendung eines so genannten Bi-Stretchgewebes als vorteilhaft erwiesen. Bei Verwendung eines Bi-Stretchgewebes können vom Gewebe alle Dehnungsrichtungen des Artikels und auch schon des Artikelrohlings mitgegangen werden, insbesondere ohne dass es zu unerwünschten Faltenbildungen im Bombierverfahren z.B. bei der Herstellung von Luftfederbälgen kommt.

Das textile Raumgebilde kann als Schlauch, Strumpf oder textiles Halbzeug vorliegen. Ein derartiger Schlauch oder Strumpf kann sich idealerweise der Kontur des Artikels, insbesondere des Luftfederbalges, des Metall-Gummi-Elements oder des Schwingungsdämpfers anpassen.

Beide textile Gebilde sind jeweils als Textilfasern aufgebaut, die sich im textilen Fertigungsverfahren verarbeiten lassen, insbesondere durch Verspinnen. Textilfasern sind in der Regel linienförmige Gebilde, bei denen das Verhältnis von Länge zu Durchmesser wesentlich größer als 1 ist, so dass sich eine ausreichende Bieg- und Schmiegsamkeit ergibt. Es können Spinnfasern mit begrenzter Länge, aber auch Filamente, d.h. Endlosfasern als Mono- oder Multifilamente, verwendet werden. Zu den textilen Fasern zählen auch Flockfasern, obwohl sie nicht verspinnbar sind, und auch Gummifasern, Metallfasern oder Spinnpapier, wenn diese textil verarbeitet werden können.

Als Textilfasern können bevorzugt Naturfasern verwendet werden. Hierbei kann es sich um mineralische Naturfasern, wie bspw. Asbestfasern oder Steinwolle, pflanzliche Naturfasern, wie bspw. aus Baumwolle, Flachs oder Hanf, oder auch um tierische Naturfasern, wie bspw. aus Wolle oder Seide, handeln.

Weiterhin können als Textilfasern bevorzugt Fasern aus natürlichen Polymeren, wie bspw. Regeneratfasern auf Cellulosebasis, wie Viskose, Lyocell oder Gummi, oder auch Fasern aus synthetischen Polymeren, wie bspw. Polyacrylnitril, Polypropylen, Polyester, Polyamid, Polyurethan, Polyphenylensulfid, Polyoxadiazol, Aramid, co-poly para Aramid, Polyimid, Polyetherimid, Polyetheretherketon, Polyethylen-2,6-naphthalat, Polyphenylen, Polyphenylenoxid, Polyphenylensulfid, Polyphenylenether, Polybenzoxazole, eingesetzt werden.

Es ist ebenso denkbar, Textilfasern aus anorganischen Stoffen wie Glas, Keramik, Kohlenstoff (Carbon), Metall oder Gestein, wie bspw. Basalt, zu verwenden.

Die Textilfasern können alleine oder in Kombination, d.h. als Hybridfaser, eingesetzt werden.

Welche Fasern für das textile Flächen- oder Raumgebilde eingesetzt wird, hängt im Wesentlichen von der Art des Artikels, bspw. Gummi-Metall Element bzw. Schwingungsdämpfer oder Luftfeder, der Zusammensetzung des polymeren Grundkörpers, der Anbindung des Flächen- oder Raumgebildes an den Grundkörper, fest anhaftend oder nicht fest anhaftend, und dem Anwendungszweck des Artikels ab. Die Anwendung bestimmt im Wesentlichen die erforderliche Elastizität und Flexibilität, die der Artikel während der gesamten Einsatzdauer erfüllen muss.

Bestimmte Fasern bieten von sich aus schon einen ausreichenden Brandschutz, wie bspw. Polyoxadiazol, Polyetherimid, Aramide, wie m-Aramid, p-Aramid oder co-poly-para Aramid, Metall, Glas, Keramik, Gestein, Carbon, modifiziertes Polyester, modifizierte Viskose.

Die genannten Materialien können alleine oder in Kombination, bspw. als Hybridgarn, verwendet werden. Hier kann auf eine zusätzliche brandhemmende Ausstattung unter Umständen verzichtet werden.

Die genannten Materialien können auch gemäß DE 10 2012 112 581 A1 als Sperrfäden in das Textil eingearbeitet sein.

In einer besonders bevorzugten Ausführungsform ist das textile Flächen- oder Raumgebilde mit wenigstens einer brandhemmenden Substanz ausgestattet. Ausgestattet heißt im Rahmen der vorliegenden Erfindung folgendes:
- Die flammhemmende Substanz wird auf das textile Flächengebilde oder das textile Raumgebilde mittels Streichen, Sprühen, Rakeln, oder Dippen oder über ein Kalandrierverfahren aufgebracht. Hierzu befindet sich die flammhemmende Substanz bevorzugt in einer Lösung oder einer Mischung mit geeigneter Viskosität. Diese Lösung bzw. Mischung ist bevorzugt wasserbasiert, frei von organischen Lösemitteln, frei von Halogenen und Halogenverbindungen und enthält zusätzlich wenigstens ein Bindemittel.
- Die flammhemmende Substanz wird auf die einzelne Textilfaser des textilen Flächengebildes oder des textilen Raumgebildes durch Streichen, Sprühen oder Dippen aufgebracht. Hierzu befindet sich die flammhemmende Substanz bevorzugt in einer Lösung oder in einer Mischung mit geeigneter Viskosität. Diese Lösung bzw. Mischung ist bevorzugt wasserbasiert, frei von organischen Lösemitteln, frei von Halogenen und Halogenverbindungen und enthält zusätzlich wenigstens ein Bindemittel. Hierbei kann die flammhemmende Substanz besonders gut in die Textilfaser eindringen. Erst danach wird aus der mit Flammschutzmittel versehenen Textilfaser das textile Flächengebilde oder das textile Raumgebilde hergestellt. Das textile Gebilde ist hierbei besonders gut mit dem Flammschutzmittel ausgestattet.

Die brandhemmende Ausstattung auf dem textilen Flächen- oder Raumgebilde wird in beiden Fällen bevorzugt kaltvulkanisiert, ganz bevorzugt als Reaktion mit Luftsauerstoff oder durch UV-Bestrahlung, unter Einsatz von hierzu geeigneten Peroxiden, vernetzt.

Die Ausstattung des Textils mit der brandhemmenden Substanz kann einseitig oder beidseitig erfolgen.

Bildet das textile Flächen- oder Raumgebilde einen Haftverbund mit der Artikeloberfläche, so wird die Ausstattung mit der brandhemmenden Substanz in der Regel einseitig erfolgen, und zwar zur Außenseite des Artikels. Eventuell ist es möglich, die zur Bildung eines Haftverbundes eingesetzte Haftschicht oder das Haftmittel zusätzlich selbst brandhemmend auszustatten.

Steht der Überzug in keiner unmittelbaren Verbindung zu der Artikeloberfläche, so kann in einer besonders bevorzugten Ausführungsvariante das textile Flächen- oder Raumgebilde von beiden Seiten, d.h. von Vorder- und Rückseite aus, brandhemmend ausgestattet sein.

Als Flammschutzmittel können alle der fachkundigen Person bekannten Flammschutzmittel verwendet werden.

Es kommen hierbei insbesondere Stannate, wie Zinkstannat oder Zinkhydroxystannat, Hydroxide, wie Magnesiumhydroxid oder Aluminiumhydroxid, Cyanurate, wie Melamincyanurat, Borate, wie Zinkborat, phosphorhaltige Komponenten, wie Resorcinoldiphosphat oder aromatische Polyphosphate, stickstoffhaltige Komponenten, wie Ammoniumphosphat, Intumeszenzgemische, Carbonate, wie Calciumcarbonat oder Magnesiumcarbonat, oder Blähgraphit in Frage.

Intumeszenzgemische blähen zu Schäumen auf. Sie werden benutzt, um brennbare Materialien wie Kunststoffe oder Holz, aber auch Stahl, der bei erhöhter Temperatur seine Festigkeit einbüßt, gegen die Einwirkung von Wärme und Feuer zu schützen. Gegebenenfalls können auch noch geringe Mengen an Antimontrioxid, trotz der gesundheitsgefährdenden Wirkung, in Kombination mit wenigstens einem der genannten Flammschutzmittel verwendet werden.

Bei dem Überzug kann es sich auch um wenigstens eine Schrumpffolie handeln.

Diese Schrumpffolie kann alleine oder in Kombination mit wenigstens einem textilen Flächengebilde und / oder mit wenigstens einem textilen Raumgebilde verwendet werden. Somit kann der Überzug aus einer oder aus mehreren Schichten bestehen.

Als Schrumpffolien werden kalt gereckte thermoplastische Kunststoff-Folien bezeichnet, die sich insbesondere bei Wärmebehandlung wieder auf ihren Urzustand zusammenziehen. Das Schrumpfen wird bei den vorliegenden Artikeln ausgenutzt, damit die Folie auf der Artikeloberfläche teilweise oder vollständig fest aufliegt. Bevorzugt hat die Schrumpffolie hierzu die Form eines Schrumpfschlauches. Es können hierbei Schrumpfschläuche verwendet werden, die unter Einwirkung von Wärme Schrumpfen, aber auch die Verwendung von so genannten "Kaltschrumpfschläuchen" ist möglich. Letztere kommen ohne jede Wärmewirkung aus, was den Vorteil bietet, dass die Reversion der unter dem Überzug befindlichen Polymermischungen reduziert oder verhindert wird.

Als Basis für die Schrumpffolie kann bspw. Polyethylenterephthalat, Polyethylen, Polyvinylchlorid oder insbesondere für Kaltschrumpfschläuche EPDM oder Silikon verwendet werden.

Die Schrumpffolie kann von sich aus brandhemmend sein oder brandhemmend ausgestattet sein.

In einer besonders bevorzugten Ausführungsform ist die Schrumpffolie mit wenigstens einer brandhemmenden Substanz ausgestattet. Ausgestattet heißt im Rahmen der vorliegenden Erfindung folgendes:
- Die flammhemmende Substanz wird auf die Schrumpffolie mittels den der fachkundigen Person bekannten Verfahren, wie bspw. Streichen, Sprühen, Rakeln, Dippen oder während eines Kalandriervorgangs aufgebracht. Hierzu befindet sich die flammhemmende Substanz bevorzugt in einer Lösung oder einer Mischung mit geeigneter Viskosität. Diese Lösung bzw. Mischung ist bevorzugt wasserbasiert, frei von organischen Lösemitteln, frei von Halogenen und Halogenverbindungen und enthält zusätzlich wenigstens ein Bindemittel.
- Die Schrumpffolie ist direkt mit der flammhemmenden Substanz ausgestattet. Hierzu wird die flammhemmende Substanz bei der Herstellung der Folie dem Folienmaterial ggf. neben weiteren Bestandteilen hinzugefügt und anschließend wird die Folie auf dem der fachkundigen Person bekannten Wege, z.B. durch Kalandrieren, hergestellt. Dies hat den Vorteil, dass kein separater zusätzlicher Verfahrensschritt benötigt wird.

Die brandhemmende Ausstattung auf der Schrumpffolie wird in beiden Fällen bevorzugt kaltvulkanisiert, ganz bevorzugt als Reaktion mit Luftsauerstoff oder durch UV-Vernetzung unter Einsatz von hierzu geeigneten Peroxiden. Hierdurch wird sichergestellt, dass es zu keiner Vor-Schrumpfung der Folie kommt.

Die Ausstattung der Schrumpffolie, insbesondere des Schrumpfschlauches, mit der brandhemmenden Substanz kann einseitig oder beidseitig erfolgen.

Bildet die Schrumpffolie einen Haftverbund mit der Artikeloberfläche, so wird die Ausstattung mit der brandhemmenden Substanz in der Regel einseitig erfolgen, und zwar zur Außenseite des Artikels. Eventuell ist es möglich, die zur Bildung eines Haftverbundes eingesetzte Haftschicht oder das Haftmittel zusätzlich selbst brandhemmend auszustatten.

Steht der Überzug in keiner unmittelbaren Verbindung zu der Artikeloberfläche, so kann in einer besonders bevorzugten Ausführungsvariante die Schrumpffolie, insbesondere der Schrumpfschlauch, von beiden Seiten, d.h. von Vorder- und Rückseite aus, brandhemmend ausgestattet sein.

Als Flammschutzmittel können auch hier alle der fachkundigen Person bekannten Flammschutzmittel verwendet werden.

Es kommen hierbei insbesondere Stannate, wie Zinkstannat oder Zinkhydroxystannat, Hydroxide, wie Magnesiumhydroxid oder Aluminiumhydroxid, Cyanurate, wie Melamincyanurat, Borate, wie Zinkborat, phosphorhaltige Komponenten, wie Resorcinoldiphosphat oder aromatische Polyphosphate, stickstoffhaltige Komponenten, wie Ammoniumphosphat, Intumeszenzgemische, Carbonate, wie Calciumcarbonat oder Magnesiumcarbonat, oder Blähgraphit in Frage.

Intumeszenzgemische blähen zu Schäumen auf. Sie werden benutzt, um brennbare Materialien wie Kunststoffe oder Holz, aber auch Stahl, der bei erhöhter Temperatur seine Festigkeit einbüßt, gegen die Einwirkung von Wärme und Feuer zu schützen. Gegebenenfalls können auch noch geringe Mengen an Antimontrioxid, trotz der gesundheitsgefährdenden Wirkung, in Kombination mit wenigstens einem der genannten Flammschutzmittel verwendet werden.

Der Überzug kommt insbesondere für folgende Artikel zur Anwendung:

### - Schlauchförmige Körper

Schlauchförmige Körper umfassen die Produktgruppe Förderschläuche aller Art, Luftfederbälge (Kreuzlagenbälge, Axialbälge) und Kompensatoren in verschieden Ausführungen (z.B. Torsionskompensator, Lateralkompensator). Das Aufbaukonzept ist dabei überall gleich, nämlich umfassend eine Außenschicht (Mantel), eine Innenschicht (Seele) sowie insbesondere einen eingebetteten ein- oder mehrlagigen Festigkeitsträger. Zusätzlich kann noch wenigstens eine Zwischenschicht, beispielsweise zwischen zwei Festigkeitsträgerlagen, vorhanden sein. Bei Förderschläuchen kann die Innenschicht noch einen medienbeständigen Inliner, beispielsweise in Form einer PTFE-Folie, aufweisen, beispielsweise bei Chemikalienschläuchen. Auch eine zusätzliche Barriereschicht mit geringer Permeationsrate, insbesondere in Form von Folien, beispielsweise als Polyamidfolie, kann vorhanden sein, wobei hier insbesondere Klimaschläuche zu nennen sind. Die Außenschicht eines schlauchförmigen Körpers, insbesondere die gesamte Oberfläche der Außenschicht, ist mit dem Überzug ausgestattet.

### - Antriebsriemen

Antriebsriemen, die zumeist mit einem eingebetteten Festigkeitsträger mit in Längsrichtung verlaufenden parallel angeordneten Zugträgern (Zugstränge) versehen sind, kommen in verschiedenen Ausführungsformen vor, und zwar als Flachriemen, Keilriemen, Keilrippenriemen, Zahnriemen und Verbundseile, die jeweils einen Unterbau mit einer Kraftübertragungszone und eine Decklage als Riemenrücken aufweisen. Der wesentliche Unterschied liegt dabei in der Konstruktion der Kraftübertragungszone, bedingt durch unterschiedliche Oberflächengeometrien, beispielsweise durch eine zahnförmige Profilierung bei Zahnriemen. Der Überzug kommt insbesondere bei der Kraftübertragungszone, gegebenenfalls zusätzlich auch bei der Decklage zur Anwendung. Der Überzug kann zudem zusätzlich zur flammhemmenden Kantenversiegelung zum Einsatz gelangen.

### - Dämpfungselement eines Lagers, einer Buchse oder einer Schichtfeder, Konusfeder

Das Dämpfungselement umfasst einen polymeren Werkstoff mit elastischen Eigenschaften und kommt zumeist im Rahmen eines Metall-Polymer-Verbundes zum Einsatz, und zwar in Form eines Lagers mit einem Lageroberteil und Lagerunterteil, einer Buchse mit Kern und Hülse oder einem Metall-Gummi-Federelement, wie z.B. einer Schicht-, oder Konusfeder.Vorzugsweise werden hier alle freien Oberflächen des Dämpfungselementes mit dem Überzug versehen.

Von besonderer Bedeutung ist der Luftfederbalg, der in Verbindung mit der Figurenbeschreibung noch näher vorgestellt wird.

Bei der Bildung des Grundkörpers kommen insbesondere (teil)vulkanisierbare Polymermischungen zum Einsatz, wobei folgende beiden Werkstoffvarianten wegen ihrer elastischen Eigenschaften zu nennen sind:

### - Variante A (Elastomere)

Die Polymermischung ist eine vulkanisierbare thermoplastfreie Kautschukmischung, enthaltend wenigstens eine Kautschukkomponente sowie weitere Mischungsingredienzien. Als Kautschukkomponenten sind insbesondere zu nennen: Ethylen-Propylen-Kautschuk (EPM), Ethylen-Propylen-Dien-Kautschuk (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR), Bromiertes Copolymer aus Isobutylen und Paramethylstyrol (BIMS), Butadien-Kautschuk (BR), Chloriertes Polyethylen (CM), Chlorsulfoniertes Polyethylen (CSM), Polyepichlorhydrin (ECO), Terpolymere des ECO mit Ethylenoxid und ungesättigten Monomeren (ETER), Ethylen-Vinylacetat-Kautschuk (EVA), Acrylat-Kautschuk (ACM), Ethylen-Acrylat-Kautschuk (AEM), Silikonkautschuk (MQ, VMQ, PVMQ, FVMQ), Fluorierter Methylsilikonkautschuk (MFQ), Perfluorinierter Propylen-Kautschuk (FFPM), Perfluorcarbon-Kautschuk (FFKM), Polyurethan (PU).

Die vorgenannten Kautschuktypen können unverschnitten sein. Auch der Einsatz eines Verschnittes, insbesondere in Verbindung mit einem der vorgenannten Kautschuktypen, beispielsweise ein NR/BR-Verschnitt oder ein BR/SBR-Verschnitt, ist möglich.

Welcher Kautschuktyp bevorzugt wird, hängt von der Artikelart ab. Besonders Vielfältig ist der Einsatz von verschiedenen Kautschuktypen bei schlauchförmigen Körpern, wobei hier insbesondere folgende Kautschukkomponenten zu nennen sind: NR, IR, ACM, AEM, BIMS, CM, CR, IIR, BIIR, CIIR, ECO, EPM, EPDM, ETER, EVA, FKM, HNBR, VMQ oder FVMQ. Bei Antriebsriemen kommen insbesondere Kautschukmischungen auf der Basis von EPM und/oder EPDM (bei Keil- und

Keilrippenriemen) sowie NBR, speziell jedoch HNBR (bei Zahnriemen) zur Anwendung.

Die üblichen Mischungsingredienzien umfassen wenigstens einen Vernetzer oder ein Vernetzersystem (Vernetzungsmittel und Beschleuniger). Zusätzliche Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente, Verstärkungsfasern). Diesbezüglich wird auf den allgemeinen Stand der Kautschukmischungstechnologie verwiesen.

### - Variante B (Thermoplastische Elastomere)

Die Polymermischung ist eine teilvulkanisierbare Polymermischung, enthaltend wenigstens eine Thermoplastkomponente, wenigstens eine Kautschukkomponente, die zumindest teilvernetzbar ist sowie weitere Mischungsingredienzien. Die bevorzugten Thermoplastkomponenten sind: Polyolefin, insbesondere Polyethylen (PE) oder Polypropylen (PP), Polystyrol (PS), Polyamid (PA), beispielsweise PA6 oder PA6.6, Polyester, beispielsweise PET, PEN oder PBT.

Als Kautschukkomponenten sind hier insbesondere EPM, EPDM, SBR, CR, NR, NBR, FKM, ACM oder AEM zu nennen, die insbesondere mit keiner weiteren Kautschukkomponente verschnitten sind.

Hinsichtlich der üblichen Mischungsingredienzien wird auf die Mischungstechnologie zu der Variante A, insbesondere auf die Lehre gemäß der Offenlegungsschrift DE 100 04 632 A1 verwiesen.

Die Erfindung wird nun anhand von Ausführungsbeispielen unter Bezugnahme auf schematische Zeichnungen erläutert. Es zeigen:
Fig. 1 eine Luftfeder-Anordnung;
Fig. 2 den Schichtenaufbau eines Luftfederbalges mit einem Überzug aus einem Gewebe, welches flammhemmend ausgestattet ist.

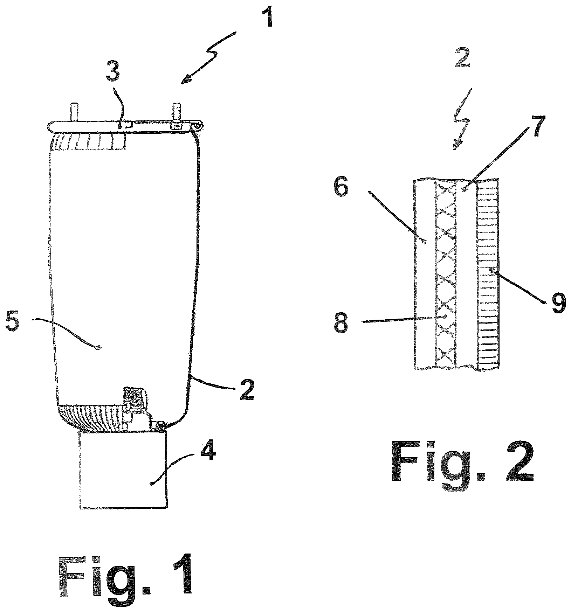

Fig. 1 zeigt eine Luftfeder-Anordnung 1, umfassend einen Luftfederbalg 2 sowie die beiden Anschlussbauteile Deckel 3 und Abrollkolben 4, und zwar unter Ausbildung einer volumenelastischen Luftkammer 5.

Fig. 2 zeigt nun den Schichtenaufbau eines fertig gestellten Luftfederbalges 2. Der Luftfederbalg besteht dabei aus einer Innenschicht 6 und Außenschicht 7 als elastischer Grundkörper, beispielsweise aus einer vulkanisierten Kautschukmischung auf der Basis von NR, einer zwischen der Innenschicht 6 und Außenschicht 7 eingebetteten Festigkeitsträgerschicht 8, beispielsweise in Form eines Polyamid-Gewebes, sowie aus einem Überzug 9, der mit der Außenschicht 8 in direkter Verbindung steht. Der Überzug 9 in Form eines Gewebes ist mit wenigstens einem flammhemmenden Mittel ausgestattet.

### Bezugszeichenliste

### (Teil der Beschreibung)

- 1: Luftfeder-Anordnung
- 2: Luftfederbalg
- 3: Deckel
- 4: Abrollkolben
- 5: volumenelastische Luftkammer
- 6: Innenschicht eines Luftfederbalges
- 7: Außenschicht eines Luftfederbalges
- 8: Festigkeitsträgerschicht eines Luftfederbalges
- 9: Überzug

## Patentansprüche

1. Artikel mit einem Grundkörper aus einem polymeren Werkstoff mit elastischen Eigenschaften, **dadurch gekennzeichnet, dass** die Artikeloberfläche vollständig oder teilweise mit wenigstens einem Überzug versehen ist, wobei der Überzug aus wenigstens einem textilen Flächengebilde und / oder aus wenigstens einem textilen Raumgebilde und / oder aus wenigstens einer Schrumpffolie gebildet wird, welche(s) jeweils von sich aus brandhemmend wirken kann und / oder brandhemmend ausgestattet ist und wobei der Überzug keine unmittelbare Verbindung zur Artikeloberfläche hat.

2. Artikel nach Anspruch 1, **dadurch gekennzeichnet, dass** das textile Flächengebilde und / oder das textile Raumgebilde und / oder die Schrumpffolie brandhemmend ausgestattet ist.

3. Artikel nach Anspruch 2, **dadurch gekennzeichnet, dass** die brandhemmende Ausstattung auf der Basis wenigstens einer flammhemmenden Substanz ist.

4. Artikel nach einem der Ansprüche 1 bis 3, **dadurch gekennzeichnet, dass** die Schrumpffolie als Schrumpfschlauch ausgebildet ist.

## Claims

1. Article having a main body composed of a polymeric material having elastic properties, **characterized in that** the article surface is completely or partially provided with at least one cover, wherein the cover is formed from at least one sheetlike textile construct and/or from at least one spacelike textile construct and/or from at least one shrink film, each of which may of itself have a fire-retardant effect and/or has a fire-retardant finish and wherein the cover is not in direct contact with the article surface.

2. Article according to Claim 1, **characterized in that** the sheetlike textile construct and/or the spacelike textile construct and/or the shrink film has a fire-retardant finish.

3. Article according to Claim 2, **characterized in that** the fire-retardant finish is based on at least one flame-retardant substance.

4. Article according to any of Claims 1 to 3, **characterized in that** the shrink film is configured as a shrink tube.

## Revendications

1. Article comportant un corps de base composé d'un matériau polymérique doté de propriétés élastiques, **caractérisé en ce que** la surface de l'article est pourvue totalement ou partiellement d'au moins un enrobage, l'enrobage étant formé d'au moins un matériau en feuille textile et/ou d'au moins une structure spatiale textile et/ou d'au moins une feuille rétractable, qui à chaque fois peut agir de manière ignifuge de lui-même/d'elle-même et/ou être équipé(e) de manière à être ignifuge et l'enrobage ne possédant aucune liaison directe avec la surface de l'article.

2. Article selon la revendication 1, **caractérisé en ce que** le matériau en feuille textile et/ou la structure spatiale textile et/ou la feuille rétractable sont équipés de manière à être ignifuges.

3. Article selon la revendication 2, **caractérisé en ce que** l'équipement ignifuge est à base d'au moins une substance ignifuge.

4. Article selon l'une quelconque des revendications 1 à 3, **caractérisé en ce que** la feuille rétractable est formée comme tuyau rétractable.
